# EUROPEAN PATENT APPLICATION

(11) **EP 4 471 713 A1**
(43) Date of publication of application: **04.12.2024**
(21) Application number: 23176002.6
(22) Date of filing: 30.05.2023
(51) Int. Cl.: G06T 7/11, G06T 7/136, G06T 7/143, G06T 7/174, G06T 7/194

(54) **SEGMENTATION IN VIDEO FRAMES**

(71) Applicant: Koninklijke Philips N.V., 5656 AG Eindhoven (NL)
(72) Inventor: VAN GEEST, Bartholomeus Wilhelmus Damianus, 5656AG Eindhoven (NL); VAREKAMP, Christiaan, 5656AG Eindhoven (NL)
(74) Representative: Philips Intellectual Property & Standards

(57) **Abstract**

A method of object segmentation in video frames. The method comprises obtaining a current segmentation mask of an object in a current video frame and generating a temporally consistent current segmentation mask of the object for the current video frame using the segmentation mask and a segmentation obtained from one or more previous and/or later video frames.

## Description

### FIELD OF THE INVENTION

The invention relates to object segmentation of frames in a video. The invention also relates to object segmentation for use in depth estimation for a multi-view video.

### BACKGROUND OF THE INVENTION

Recent advances in machine learning have enabled image based (semantic) object detection and segmentation (e.g., Detectron2). In multi-view video, some algorithms, such as depth-estimation, can benefit from using the results of these techniques as they provide a means to limit the search space in the estimation process.

Furthermore, using semantic object type information can steer the estimation process to use model-based specializations. For example, an algorithm specifically made or tuned to perform depth-estimation on humans, or an algorithm specifically made or tuned for estimating the depth profile of a ball.

When depth-estimation is run on video input, the image-based (semantic) object detection and segmentation can be deployed on a frame-by-frame basis.

However, it has been realized that running image-based (semantic) object detection on a frame-by-frame basis can lead to visual artifacts in a resulting multi-view video when segmentation is used for depth estimation.

As such, there is a need to improve object segmentation when used on video frames and, in particular, when used for depth estimation in multi-view video.

### SUMMARY OF THE INVENTION

The invention is defined by the claims.

According to examples in accordance with an aspect of the invention, there is provided a method of object segmentation in video frames, the method comprising:
obtaining a current segmentation mask of an object in a current video frame; and
generating a temporally consistent current segmentation mask of the object for the current video frame using the segmentation mask and a segmentation obtained from one or more previous and/or later video frames.

Temporal consistency of segmentation masks is especially important in some video applications. For example, it has been realized that in 3D video (e.g., immersive video), object segmentation can be used for depth estimation. However, if the segmentation masks are not temporally consistent, this may lead to jitter in the video as the edges of the segmentation masks appear to suddenly change depth. If these edges do not align with the edges of the object intended to be segmented, this can cause visual artefacts in the rendered video.

Segmentation algorithms are currently trained on static images. This is due to the large number of images needed to successfully train the segmentation algorithms. It has been realized that, in theory, it is possible to train a segmentation algorithm using various video frames to aim to improve temporal consistency. However, the amount of training data and ground truth data needed to train such algorithms for general use means that these types of segmentation algorithms are not currently a practical option.

As such, it is proposed to obtain a segmentation mask for a current frame and then adapt/correct the segmentation mask using segmentation information from temporally distinct frame(s) (i.e., previous or later frames). Thus, currently available segmentation algorithms can be used. Temporally consistency in the segmentation mask is improved by adapting/correcting it after comparing it to segmentation information from a previous/later frame.

In other words, instead of attempting to determine temporally consistent segmentation masks directly, currently available segmentation algorithms can be leveraged to generate segmentation masks, where the segmentation masks are then corrected (i.e., adapted to be temporally consistent) using available information from temporally distinct frames.

Various methods for adapting the current segmentation mask, to generate a temporally consistent current segmentation mask for the current frame, will be explained below. Some embodiments involve comparing the current segmentation mask to a segmentation from the previous/later frame(s) and adapting the current segmentation mask based on the comparison. Other embodiments involve the use of a neural network trained to generate temporally consistent segmentation mask for the current video frame.

The aim is to improve object segmentation in video frames. This is achieved by generating temporally consistent segmentation masks by leveraging existing segmentation technology on current and temporally distinct video frames.

The segmentation from the previous/later frames may comprise a segmentation mask, a bounding box, a portion of the previous/later frame(s), object keypoints etc.

Preferably, the one or more previous and/or later video frames include one or more of the temporally neighboring previous and later video frames.

Generating the temporally consistent current segmentation mask may comprise comparing the current segmentation mask to the segmentation obtained using one or more previous and/or later video frames and based on the comparison, adapting the current segmentation mask to generate the temporally consistent current segmentation mask.

Obtaining a current segmentation mask of an object may comprise obtaining two spatially neighboring current segmentation masks in a current video frame. Comparing the current segmentation mask may comprise generating a union segmentation mask by combining the two spatially neighboring current segmentation masks and, comparing the union segmentation mask with one or more temporal segmentation masks corresponding to the previous and/or later video frames, where adapting the current segmentation mask comprises assigning the union segmentation mask to a corresponding object in the current video frame.

One type of segmentation error which leads to temporal inconsistency is when a single object is erroneously detected and segmented into two separate objects. This solution solves this error by checking whether a union of two neighboring segmentation masks is more temporally consistent than the neighboring segmentation masks by themselves.

The spatially neighboring segmentation masks are preferably of the same object class. However, in some cases, an image region may be wrongly classified. In that case, the union of two spatially neighboring masks of different object classes (with one or both object classes being incorrect) may result in a correct segmentation mask.

Neighboring segmentation masks (i.e., segmentation masks with overlapping or close edges) of the same class can indicate two separate objects of the same class close to each other or may indicate an erroneously detected object as discussed above.

One method for comparing for temporal consistency is to first compare the number of segmentation masks for an object class in the current frame to said number in a previous/later frame. This is based on the assumption that, between frames close in time, the number of objects shouldn't change too often. A sudden change may indicate an erroneously detected segmentation.

If the number is not equal, a comparison between a union segmentation mask with the segmentation masks in previous/later frame(s) can then be performed. Alternatively, a comparison can be performed for any neighboring segmentation masks.

Comparing the current segmentation mask may comprise generating a background image using a plurality of previous and/or later video frames, determining the difference between the current video frame and the background image to identify foreground regions in the current video frame and comparing the regions corresponding to the current segmentation mask and the identified foreground regions to detect either missed and/or invalid segmentation regions, where adapting the current segmentation mask comprises adding the missed segmentation regions to the current segmentation masks and/or removing the invalid segmentation regions from the current segmentation mask.

In some cases, a segmentation mask may miss a portion of an object. Thus, a background frame (generated using previous and/later video frames) can be used to identify foreground region segmentations and compare said segmentations to the current segmentation mask. This enables the detection of missed segmentation regions for foreground objects.

Adding the missed segmentation regions comprises adapting the current segmentation mask to include the missed segmentation regions.

Comparing the segmentation mask may comprises obtaining one or more temporal segmentation masks corresponding to the object from the previous and/or later frames, determining a motion field between the current video frame and the previous and/or later video frames, temporally projecting the temporal segmentation masks to the time corresponding to the current video frame using the motion field and comparing the projected temporal segmentation masks to the current segmentation mask to detect missed and/or invalid segmentation regions, where adapting the current segmentation mask comprises adding the missed segmentation regions to the current segmentation mask and/or removing the invalid segmentation regions from the current segmentation mask.

In an example, a motion field can be determined using known motion estimation algorithms such as optical flow.

A motion field is known to provide an indication of motion between frames. It has been realized that this information can be used to project, over time, a segmentation mask from a previous/later frame. Thus, the projected segmentation mask provides, in essence, a prediction of the expected segmentation mask at the current frame. However, the edges may not be as accurate as a segmentation performed in the current frame directly. As such, the projected segmentation is used to provide temporal consistency for the more accurate current segmentation mask. This is achieved by comparing the current segmentation mask to the projected segmentation mask to check for any missed segmentation regions.

Comparing the current segmentation mask may comprise obtaining one or more temporal segmentation masks from the previous and/or later frames and comparing the shape of the temporal segmentation masks and the texture bound by the temporal segmentation masks to the shape of the current segmentation mask and the texture bound by the current segmentation mask respectively to detect missed and/or invalid segmentation regions, where adapting the current segmentation mask comprises adding the missed segmentation regions to the current segmentation mask and/or removing the invalid segmentation regions from the current segmentation mask.

For example, a significant difference (e.g., above a threshold) in shape between the temporal segmentation mask and the current segmentation mask may indicate that the current segmentation mask is missing a region and/or contains an invalid region. Similarities and/or differences in texture in the suspected missing/invalid region(s) can then be used to identify the actual shape of the missing/invalid segmentation region(s).

Adapting the current segmentation mask may further comprise performing a visibility check on the missed and/or invalid segmentation regions to determine whether they are occluded in the current frame, wherein adapting the current segmentation mask is in response to at least part of the missed and/or invalid segmentation regions not being occluded in the current frame.

A visibility check comprises determining whether an object is occluded in a frame.

In some cases, a region of an object may be missing in the current segmentation mask because it is occluded by another objects. In these cases, the current segmentation mask may already be correct and thus there is no need to adapt the current segmentation mask even when a missed segmentation region is detected.

Generating the temporally consistent current segmentation mask may comprises obtaining one or more temporal segmentation masks from the previous and/or later frames corresponding to the same object class as the current segmentation and inputting the current segmentation mask and the temporal segmentation masks into a neural network trained to output an adapted segmentation mask for the current frame.

In this case, the neural network is trained with the already determined current segmentation mask and the temporal segmentation mask(s) and thus the training data needed can be much smaller than for a segmentation model.

Preferably, the current video frame is also input into the neural network. Preferably, the previous and/or later frames are input into the neural network.

The invention also provides a method of object segmentation in video frames using a prompt-based segmentation model, the method comprising:
applying an algorithm to a first video frame to obtain a first indication of the position of an object in the first video frame;
inputting the first video frame into the prompt-based segmentation model using the first indication of the position of the object as a prompt;
applying the same algorithm to a second, later, video frame to obtain a second indication of the position of the object in the second video frame; and
inputting the second video frame into the prompt-based segmentation model using the second indication of the position of the object as a prompt.

Prompt-based segmentation models (e.g., Segment Anything Model - SAM) have recently proved to provide robust and accurate segmentations. However, such models are trained on static images and thus do not provide temporal consistency when used on video frames. SAM often outputs various segmentation masks for a single object based on the prompt used.

The prompts used for SAM often include manually selected prompts or an array of arbitrarily placed prompts. Manually placing prompts is not a practical solution for object segmentation in video. Arbitrary placement of prompts does not provide temporal consistency as the object may have moved over various frames, meaning that the output segmentation mask will not be consistent over time as the prompt is not consistent relative to the object.

In order to ensure temporally consistent outputs of SAM, it has been realized that temporally consistent prompts are needed. This can be achieved by using the same algorithm over various frames to obtain indications of the position of an object in the frames. These indications of positions will provide a more temporally consistent position of the position of time, even when the object moves position between frames, as the algorithm is used on each frame.

The algorithm may comprise a keypoint detection algorithm configured to determine one or more keypoints of an object in an image, wherein the first and second indications of the position of the object comprise one or more keypoints of the object determined by the keypoint detection algorithm.

The algorithm may be configured to segment the object in the input video frame, identify pixels corresponding to the segmented object and determine the center of said pixels, wherein the first and second indications of the position of the object comprise the corresponding determined center.

The method may further comprise performing a visibility check on the first video frame to detect whether the first indication of the position of the object is occluded by a different object and, based on the indication of the position being occluded, adapting the first indication of the position to a non-occluded position and performing a visibility check on the second video frame to detect whether the second indication of the position of the object is occluded by a different object and, based on the indication of the position being occluded, adapting the second indication of the position to a non-occluded position.

The method may further comprise receiving a confidence score for each of the first and second indications of the position of the object, wherein inputting the second video frame into the prompt-based segmentation model is based on both confidence scores being above a minimum confidence threshold.

The algorithm may be configured to perform all of the steps of any of the methods of object segmentation in video frames described above, wherein the first and second indications of the position of the object comprise a corresponding temporally consistent current segmentation mask.

The invention also provides a computer program carrier comprising computer program code which, when executed on a computer, causes the computer to perform all of the steps according to any of the afore-mentioned methods.

The computer program carrier may comprise computer memory (e.g., random-access memory), computer storage (e.g., hard drives, solid-state drives etc.). The computer program carrier may be a bitstream carrying the computer program code.

The invention also provides a system comprising a processor configured to perform all of the steps according to any of the methods provided by the invention as described above.

The invention also provides computer-implemented methods comprising all of the steps according to any of the methods provided by the invention as described above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a scene with two people;
Fig. 2 illustrates the scene of Fig. 1 overlayed with correct segmentation masks;
Fig. 3 illustrates the scene of Fig. 1 overlayed with a first type of incorrect segmentation masks;
Fig. 4 illustrates the scene of Fig. 1 overlayed with a second type of incorrect segmentation mask;
Fig. 5 shows the creation and use of a background image;
Fig. 6 illustrates a scene with a person occluded by an object;
Fig. 7 shows a method of object segmentation in video frames; and
Fig. 8 shows a method of object segmentation in video frames using a prompt-based segmentation model.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method of object segmentation in video frames. The method comprises obtaining a current segmentation mask of an object in a current video frame and generating a temporally consistent current segmentation mask of the object for the current video frame using the segmentation mask and a segmentation obtained from one or more previous and/or later video frames.

Conceptually, designing and training segmentation models such that temporal aspects are taken into account is, in theory, possible. However, currently, this idea is less feasible due to the increased model complexity and the required size of the training dataset.

On the other hand, when observing the temporal inconsistencies of image-based object detection and segmentation, it has been realized that combining results from image-based instance segmentation with several visual computing techniques may result in an improvement of the consistency and accuracy of instance segmentation.

Thus, it is proposed to combine the results of per frame instance segmentation with visual computing techniques to generate a temporally consistent and more accurate segmentation. For example, these techniques may detect incorrect segmentation results using temporal context and correct the segmentation into a more accurate and temporally consistent segmentation.

In another example, a second network can be added to process the output segmentation maps of a fixed instance segmentation network to make these temporally consistent.

Temporal consistency of segmentation masks, when these are generated by neural networks that were trained on still images, is a problem for object segmentation in video frames. Several measures are proposed herein to make the segmentation masks temporally stable such that it they can be used for video applications and, in particular, depth estimation.

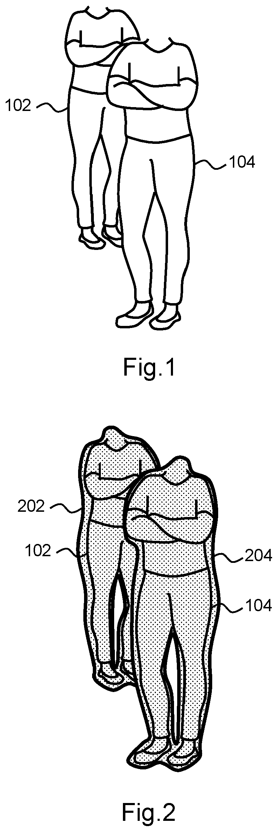

Fig. 1 illustrates a scene with two people 102 and 104. The first person 102 is occluded by the second person 104. If this scene is captured in a video frame used for depth estimation, segmentation could be applied to the video frame. When algorithms, such as depth-estimation, make use of the results on video input, they do need them to be temporally consistent. However, inconsistent input may lead to unstable depth-maps, which in turn leads to visually flickering artefacts when used for novel view synthesis.

Fig. 2 illustrates the scene of Fig. 1 overlayed with correct segmentation masks 202 and 204. It is noted that the "correct" segmentation masks 202 and 204 are shown at a distance from the edges of first and second person 102 and 104 to distinguish the segmentation masks more easily from the people. It will be appreciated that, in practice, correct segmentation masks should lie along the edges of the segmented objects (e.g., the people shown in Fig. 2). In this case, the segmentation is correct as segmentation mask 202 exactly covers the first person 102 and segmentation mask 204 exactly covers the second person 104.

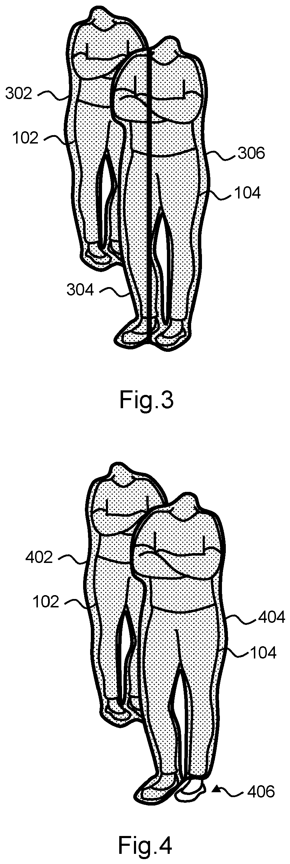

Fig. 3 illustrates the scene of Fig. 1 overlayed with a first type of incorrect segmentation masks 304 and 306. In this case, the segmentation mask 302 of person 103 is correct but the segmentation of person 104 leads to one object instance being split into two segmentation masks 304 and 306. However, in this case, both segmentation masks 304 and 306 align with the silhouette of person 104.

It has been realized that a common incorrect segmentation leads one object instance to be falsely split into two or more mask instances, where the union of pixels from both falsely labeled mask instances may in some cases still align with the silhouette of a single ground truth object instance.

To detect that an object instance has been falsely split into different parts, combinations of detected instances that lie close to each other in the image can be tested for the hypothesis that they form a single instance. In a basic implementation, the union of multiple adjacent instances of the same class (e.g., humans) is taken, and the Intersection over Union (IoU) metric is evaluated with all overlapping/spatially neighboring instances detected in the previous (or later) frame. In case the IoU is higher than a threshold (e.g., 0.95) then the adjacent instances are merged into a single instance. This would solve the problem shown in Fig. 3.

For example, the union of segmentation masks 304 and 306 could be compared to segmentation masks in previous and/or later frames (e.g., within 5, 10, 20, 30 frames, within 0.1, 0.5, 1 seconds etc.). The comparison could be made with one or more of the temporally distinct frames.

Fig. 4 illustrates the scene of Fig. 1 overlayed with a second type of incorrect segmentation mask 404. In this case, person 102 is correctly detected and segmented with segmentation mask 402. However, person 104 has a correct detection, but the segmentation mask 404 misses a foot 406 of person 104.

In general, this type of incorrect segmentation leads to the boundary of the object, represented by the segmentation mask, being incorrectly placed. For example, part of the object is missed. It has been recognized that the second type of incorrect segmentation gives most problems when used in the context of depth-estimation and novel view synthesis. In general, the second type of incorrect segmentation is considered the most problematic.

Several implementations are described herein to solve the second type of incorrect segmentation. It will be appreciated that these solutions can also be combined.

A first solution to the second type of incorrect segmentation involves the creation and use of a background image of the scene.

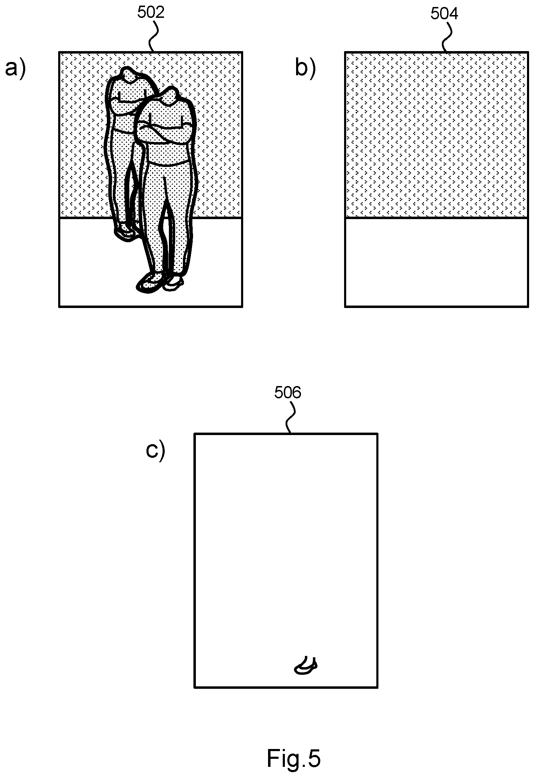

Fig. 5 shows the creation and use of a background image 504. Fig. 5a shows a current video frame 502 overlayed with an incorrect segmentation. In this case, the incorrect segmentation is missing a foot of a person as shown in Fig. 4. Incorrect segmentation masks lead to temporal inconsistency over the video frames as the previous/later frames may have correctly segmented the foot of the person.

In this context, a static background image 504, as shown in Fig. 5b, depicts the scene of the video sequence without any of the detected and moving objects in it. It is created by the weighted accumulation of the unlabeled pixels, representing background, in the video frames over a longer time interval. For this embodiment, static cameras are assumed. For moving cameras, motion compensation should be applied in the accumulation process. Note that it then only applies to the background (unlabeled) parts which eases its application as the background is rigid and far away.

Of course, the background image 504 can also be obtained by capturing the scene at a different point in time when it is known that no objects are present in the captured scene.

The static background image 504 is used to identify foreground regions in any video frame by using the absolute frame differencing between said video frame and the background image 504. For example, the difference between current frame 502 and the background image 504 would lead to the identification of the two people in the current video frame 502.

Missed segmentations can be detected when the identified foreground regions are not part of the object segmentation masks. For example, in current video frame 502, the foot of the person in the front will be flagged as 'missed' by using this `known background' technique. Fig. 5c shows image 506 which contains the portions of the foreground regions which are not overlaid with the segmentation masks in image 502. In this case, the missing foot of the person at the front which was not covered by the segmentation masks in image 502 is shown.

To correct the missed region, the visually corresponding regions from neighboring temporal positions are determined. Their object label (when present) is used for the 'missing' region. Determining the corresponding regions is done with any of the known techniques such as motion-estimation, (sift) feature detection and tracking. A simpler (only spatial) approach is also possible where, for all pixels that have a large temporal difference signal, the spatially nearest known instance pixel is found and that instance label is used.

A second solution to the second type of incorrect segmentation involves the temporal prediction of segmentation masks. Regions from nearby moments in time (e.g. t(-1) and t(+1) ) are temporally projected to the current video frame at t=t(0) to yield a temporal prediction and hence an expected location for the region at t=t(0). A difference between the expected location and the actual location, of the region that is verified, indicates a temporal inconsistency.

For the temporal projection, a field of motion vectors (optical-flow) can be determined that indicates the per-pixel displacement from the neighboring moments in time to t=t(0). An improvement for the calculation of the optical flow involves the scanning order of the subsequent motion vectors following, but stays within, the boundaries of the segmentation masks.

A correction of inconsistent regions can be done in the same way as described for the first solution.

A third solution to the second type of incorrect segmentation involves comparing the regions bound by the segmentation masks by boundary scanning. Corresponding regions in subsequent video frames are compared by jointly comparing texture and shape while scanning their boundaries. Similarities in texture are calculated with the sum of absolute differences (SAD), the sum of squared differences (SSD), or other image matching algorithms, on a kernel that is fully part of the (foreground) object.

Similarities in shape are determined by accumulating the relative positional path differences as a 2D vector. Such accumulated 2D vector will remain in its origin when the shapes in the scanned boundary are the same and it will deviate from the origin when the shapes differ. The scanning is initialized by first searching for a corresponding starting point. The scan can also consist of a sequence of smaller boundary segments. Segmentation inconsistencies can be detected when the scanned metrics are different.

Inconsistencies can also be caused by occlusion. For example, when the arm of a subject is not visible due to occlusion, a segmentation mask not including the arm would be correct. An extra visibility check can be used to verify occlusion. Such a check could be carried out by continuing the scan guided by the path of the region that is compared against (i.e., ignoring its own shape). Continuing the scan directly gives the opportunity to correct the missing region. At least when the visibility check passes.

It will be appreciated that the solutions mentioned for the second type of incorrect segmentation can also be used to solve the first type of incorrect segmentation, as one of the regions in the split segmentation mask can be treated as a missing region as described above.

It will also be appreciated that the solutions mentioned for the second type of incorrect segmentation can also be used for invalid segmentation regions (i.e., portions of the segmentation mask which are not part of the corresponding object.

A third type of incorrect segmentation occurs when part of an object is wrongly labeled. For instance, a bag may be falsely placed on the ground before the feet of a person. The bag object class could be absent and, consequently, the reported detection probability will typically be low (e.g., 50% or less).

Another solution to all three types of incorrect segmentations involves modifying/adding to a segmentation network for temporal consistency. Most instance segmentation neural networks are trained on still images and not on video. There is a good reason for this since the annotation effort would increase considerably when adding an additional (time) dimension. Instead, efforts have been put into using larger training sets with more examples per object category and a larger variation of object categories.

When fixing most weights of the existing neural network, a limited set of weights can be tuned on new data. These weights are either parameters in existing layers or parameters of a newly added layer. By fixing most weights, overfitting of the network, due to the use of a much smaller new dataset for training, can be avoided.

Alternatively, it is proposed that the outputs of the instance segmentation network can be fed into a second neural network that is then trained with segmentation masks from temporally distinct video frames to produce temporally consistent new outputs.

Consider the known instance segmentation network Mask-R-CNN. This network outputs, per object instance, a label, a bounding box, a detection confidence, and a 28x28 pixel probability mask with a per pixel value between 0 and 1 that represents the chance that the object is present at a given pixel of the mask. As a post-processing step, the 28x28 mask is typically scaled to the resolution of the detected bounding box using bilinear interpolation after which a threshold (typically 0.5) is applied to arrive at a binary object mask at the original image resolution.

To achieve temporal consistency, it is proposed to provide a second neural network that takes as input the output from Mask-R-CNN (or other segmentation models) for the current frame and for a previous and/or later frame. The per object, scaled probability mask (i.e., at full frame resolution) can now be refined using as input multiple probability masks corresponding with different instance of the same object category for previous frames. This multiple may be fixed to, for example, eight masks and some may be empty (zero probability for all pixels). For example, when two persons were detected in the previous frame, six out of eight inputs masks are all zeros. On the other hand, if the number of detected persons exceeds eight, then only the instances with the highest confidence could be used.

New ground truth would be necessary for training this added neural network. Ground truth masks can be created by manually editing the original predicted masks and using those as ground truth.

The second network is preferably trained and run for inference per object instance in the current frame. For example, if two dog instances are detected in the current frame, the network is run twice, once per dog instance. For each run, first all dog instance masks are searched in the previous frames and the eight temporal input masks are filled. The eight channels are then concatenated with the Mask-R-CNN prediction for the instance being predicted and input to a convolutional neural network.

The second network is preferably a type U-Net to get sufficient spatial context. The output prediction is the refined probability mask for the instance being processed. While the predicted probability has values between 0 and 1, the ground truth probability mask on the other hand can consist of a binary 0 or 1 probability.

In general, the second network is a post-processing neural network that is trained to predict a more accurate, and hence temporally stable, object probability mask given probability masks produced by a first segmentation model for a temporally distinct frame and the current frame.

Of course, the second network could be used with more than one temporally distinct segmentation mask.

After running the post-processing neural network, the refined masks can be thresholded (e.g., typically at a value of 0.5) to obtain the final, temporally consistent, binary segmentation mask for the object instance.

The invention also proposes to leverage prompt-based segmentation models such as Segment Anything Model, SAM (Kirillov et.al. Segment Anything. arXiv:2304.02643, 2023), a neural network that produces a segmentation given a so-called input prompt.

In the case of SAM, an input prompt can be one or a combination of an object mask, one or more points on an object, a bounding box and a text string. Since the prompt strongly determines the output of the segmentation mask for a given object, it has been realized that it also has an impact on the temporal stability when using this neural network for video.

It has been found that, in order to achieve temporally stable prompts over a plurality of video frames, the same algorithm should be used over the temporally distinct video frames to obtain the prompts. The prompts obtained from the algorithm should provide an indication of the position of the object. By using the same algorithm over the temporally distinct video frames to provide an indication of position, any movement of the object between the frames can be captured by the prompt.

A suitable algorithm can be a keypoint detection algorithm. For example, a suitable algorithm includes a human keypoint detection algorithm obtained using a neural network called Mask R-CNN (K. He et.al. Mask R-CNN. arXiv:1703.06870v3, 2018).

Additionally, while experimenting with possible input prompts for SAM, it was found that point visibility is important to achieve a correct and temporally stable segmentation result. If an object point is occluded by another object, this can result in an incorrect segmentation mask.

Selecting non-occluded human key points of humans with a sufficiently high detection score (confidence between 0 or 1) increases temporal consistency of the segmentation results.

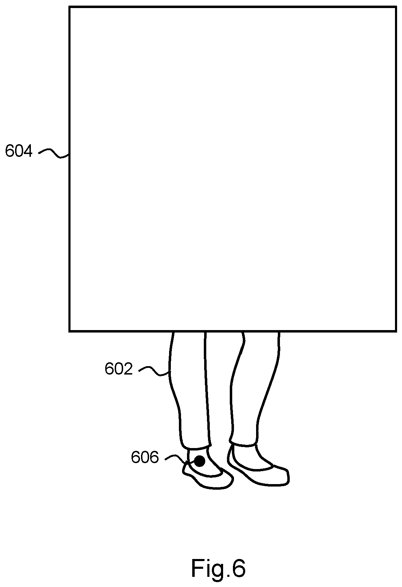

Fig. 6 illustrates a scene with a person 602 occluded by an object 604. In this case, the person 602 may not be detected by a segmentation model. If it is detected, it may receive a confidence score of less than 0.5. The reason for this low score is that the person 602 is largely occluded by the object 604.

To correctly segment the unoccluded part of the occluded person 602 using SAM, a non-occluded keypoint of the person 602 can be used as a prompt. One such keypoint may be the right ankle keypoint 606. If the right ankle keypoint 606 is selected as a prompt for SAM, a correct segmentation can be obtained. Note that if, for instance, the center point of the bounding box or the bounding box itself would have been used as the prompt, this would have resulted in incorrectly segmenting part of the occluding object 604 instead of segmenting the person 602 as a whole.

The above insights lead to the use of temporally constrained and occlusion aware input prompts for prompt-based segmentation models to improve temporal consistency of object segmentation masks in video frames.

Specifically, when dealing with the segmentation of humans, it is proposed to use human key point detection to detect key points for all humans in the frames and, in order of decreasing human detection confidence, create segmentation masks using prompt-based segmentation models using only keypoints that are not covered by a human with a higher detection confidence.

To avoid the segmentation of falsely detected humans (typically with a low confidence) temporal correspondence between detected humans can be established over time using spatial proximity. A detection with a low score is then only segmented in case a corresponding detection with a higher score is present in temporally close by previous or next video frames.

The concept can be broadened to other object classes and to the mutual interaction of point prompts, box prompts, mask prompts and text prompts. For example, an object can be segmented by segmenting all high-scoring objects in decreasing score order, determining the pixels in the bounding rectangle of the ball that are not covered by a higher scoring object, determining the center of gravity of these pixels and using the center of gravity point as a point prompt for the prompt-based segmentation model.

In another embodiment, the algorithm may be configured to determine one or more of a bounding box for the object, text indicative of the position of the object in the video frame (and, optionally, of the texture/shape of the object) and a point indicative of certain part of the object (e.g., the center of the object, an ankle of a human etc.).

It will be appreciated that the algorithm may be configured to determine one or more prompts for the object. Having more than one prompt (e.g., a keypoint and a bounding box) may provide a more accurate segmentation mask.

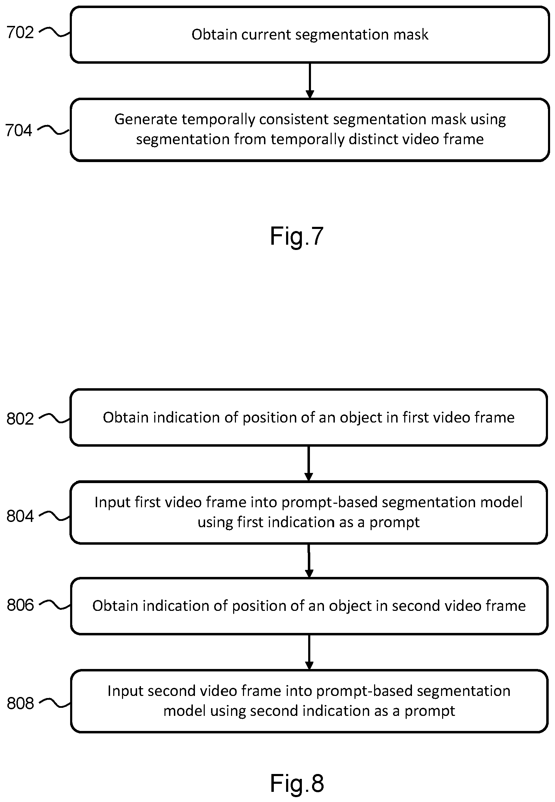

Fig. 7 shows a method of object segmentation in video frames. The method comprises obtaining 702 a current segmentation mask of an object in a current video frame. This can be achieved by using existing segmentation models on the current video frame.

The method further comprises generating 704 a temporally consistent current segmentation mask of the object for the current video frame using the segmentation mask and a segmentation obtained from one or more previous and/or later video frames (i.e., temporally distinct video frames).

In a first embodiment, the segmentation obtained from the temporally distinct frames may be a segmentation mask of the object from a temporally distinct frame. Said segmentation mask can be compared to the current segmentation mask to identify missing/invalid regions and the current segmentation mask can be adapted/corrected accordingly. Alternatively, both masks can be input into a neural network trained to output a temporally consistent segmentation for the current video frame.

In a second embodiment, the segmentation obtained from the temporally distinct frames may be a missing/invalid segmentation region obtained by finding the difference between a background image (obtained using temporally distinct frames) and the current frame. The current video frame can be corrected by including the missing regions and/or removing the invalid regions. Alternatively, the current mask and the missing/invalid segmentation regions can be input into a neural network trained to output a temporally consistent segmentation for the current video frame.

In a third embodiment, the segmentation obtained from temporally distinct frames may be a bounding box, a keypoint or text indicative of the position of the object in a temporally distinct frame. The temporally consistent segmentation mask can be generated by inputting the current segmentation mask and the bounding box, a keypoint or text indicative of the position of the object as prompts for a prompt-based segmentation model.

For any of the above embodiments, the segmentation obtained from temporally distinct frames may be temporally projected to the current frame using optical flow.

It will be appreciated that, as described above, various other methods for generating the temporally consistent segmentation mask using the segmentation obtained from temporally distinct frames and the current segmentation mask are possible.

Fig. 8 shows a method of object segmentation in video frames using a prompt-based segmentation model. The method comprises applying 802 an algorithm to a first video frame to obtain a first indication of the position of an object in the first video frame and inputting 804 the first video frame into the prompt-based segmentation model using the first indication of the position of the object as a prompt.

The method further comprises applying 806 the same algorithm to a second, later, video frame to obtain a second indication of the position of the object in the second video frame and inputting 808 the second video frame into the prompt-based segmentation model using the second indication of the position of the object as a prompt.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data. Any method described herein may be computer-implemented, where computer-implemented means that the steps of said methods are performed by one or more computers and where a computer is defined as a device suitable for processing data. A computer may be suitable for processing data according to prescribed instructions.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

Any methods described herein exclude a method for performing mental acts as such.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method of object segmentation in video frames, the method comprising:
obtaining (702) a current segmentation mask of an object in a current video frame; and
generating (704) a temporally consistent current segmentation mask of the object for the current video frame using the segmentation mask and a segmentation obtained from one or more previous and/or later video frames.

2. The method of claim 1, wherein generating the temporally consistent current segmentation mask comprises:
comparing the current segmentation mask to the segmentation obtained using one or more previous and/or later video frames; and,
based on the comparison, adapting the current segmentation mask to generate the temporally consistent current segmentation mask.

3. The method of claim 2, wherein obtaining a current segmentation mask of an object comprises obtaining two spatially neighboring current segmentation masks in a current video frame and wherein comparing the current segmentation mask comprises:
generating a union segmentation mask by combining the two spatially neighboring current segmentation masks; and
comparing the union segmentation mask with one or more temporal segmentation masks corresponding to the previous and/or later video frames,
wherein adapting the current segmentation mask comprises assigning the union segmentation mask to a corresponding object in the current video frame.

4. The method of claims 2 or 3, wherein comparing the current segmentation mask comprises:
generating a background image using a plurality of previous and/or later video frames;
determining the difference between the current video frame and the background image to identify foreground regions in the current video frame; and
comparing the regions corresponding to the current segmentation mask and the identified foreground regions to detect either missed and/or invalid segmentation regions,
wherein adapting the current segmentation mask comprises adding the missed segmentation regions to the current segmentation masks and/or removing the invalid segmentation regions from the current segmentation mask.

5. The method of any of claims 2 to 4, wherein comparing the segmentation mask comprises:
obtaining one or more temporal segmentation masks corresponding to the object from the previous and/or later frames;
determining a motion field between the current video frame and the previous and/or later video frames;
temporally projecting the temporal segmentation masks to the time corresponding to the current video frame using the motion field; and
comparing the projected temporal segmentation masks to the current segmentation mask to detect missed and/or invalid segmentation regions,
wherein adapting the current segmentation mask comprises adding the missed segmentation regions to the current segmentation mask and/or removing the invalid segmentation regions from the current segmentation mask.

6. The method of any of claims 2 to 5, wherein comparing the current segmentation mask comprises:
obtaining one or more temporal segmentation masks from the previous and/or later frames; and
comparing the shape of the temporal segmentation masks and the texture bound by the temporal segmentation masks to the shape of the current segmentation mask and the texture bound by the current segmentation mask respectively to detect missed and/or invalid segmentation regions, and
wherein adapting the current segmentation mask comprises adding the missed segmentation regions to the current segmentation mask and/or removing the invalid segmentation regions from the current segmentation mask.

7. The method of claims 5 or 6, wherein adapting the current segmentation mask further comprises performing a visibility check on the missed and/or invalid segmentation regions to determine whether they are occluded in the current frame, wherein adapting the current segmentation mask is in response to at least part of the missed and/or invalid segmentation regions not being occluded in the current frame.

8. The method of claim 1, wherein generating the temporally consistent current segmentation mask comprises:
obtaining one or more temporal segmentation masks from the previous and/or later frames corresponding to the same object class as the current segmentation; and
inputting the current segmentation mask and the temporal segmentation masks into a neural network trained to output an adapted segmentation mask for the current frame.

9. A method of object segmentation in video frames using a prompt-based segmentation model, the method comprising:
applying (802) an algorithm to a first video frame to obtain a first indication of the position of an object in the first video frame;
inputting (804) the first video frame into the prompt-based segmentation model using the first indication of the position of the object as a prompt;
applying (806) the same algorithm to a second, later, video frame to obtain a second indication of the position of the object in the second video frame; and
inputting (808) the second video frame into the prompt-based segmentation model using the second indication of the position of the object as a prompt.

10. The method of claim 9, wherein the algorithm comprises a keypoint detection algorithm configured to determine one or more keypoints of an object in an image, wherein the first and second indications of the position of the object comprise one or more keypoints of the object determined by the keypoint detection algorithm.

11. The method of claims 9 or 10, wherein the algorithm is configured to segment the object in the input video frame, identify pixels corresponding to the segmented object and determine the center of said pixels, wherein the first and second indications of the position of the object comprise the corresponding determined center.

12. The method of any of claims 9 to 11, further comprising:
performing a visibility check on the first video frame to detect whether the first indication of the position of the object is occluded by a different object and, based on the indication of the position being occluded, adapting the first indication of the position to a non-occluded position; and
performing a visibility check on the second video frame to detect whether the second indication of the position of the object is occluded by a different object and, based on the indication of the position being occluded, adapting the second indication of the position to a non-occluded position.

13. The method of any of claims 9 to 12, further comprising receiving a confidence score for each of the first and second indications of the position of the object, wherein inputting the second video frame into the prompt-based segmentation model is based on both confidence scores being above a minimum confidence threshold.

14. The method of any of claims 9 to 13, wherein the algorithm is configured to perform all of the steps of any of claims 1 to 8, wherein the first and second indications of the position of the object comprise a corresponding temporally consistent current segmentation mask.

15. A computer program carrier comprising computer program code which, when executed on a computer, causes the computer to perform all of the steps according to any of claims 1 to 8 and/or any of claims 9 to 14.

16. A system comprising a processor configured to perform all of the steps according to any of claims 1 to 8 and/or any of claims 9 to 14.
